# EUROPÄISCHE PATENTSCHRIFT

(11) **EP 2 122 075 B1**
(45) Veröffentlichungstag und Bekanntmachung des Hinweises auf die Patenterteilung: **31.12.2014**
(21) Anmeldenummer: 08707269.0
(22) Anmeldetag: 25.01.2008
(51) Int. Cl.: E04B 1/16, E04B 2/86, E04C 2/52

(54) **BAUELEMENT MIT INNENSCHALUNG**
CONSTRUCTIONAL ELEMENT COMPRISING INNER FORMWORK
ÉLÉMENT DE CONSTRUCTION À COFFRAGE INTÉRIEUR

(43) Veröffentlichungstag der Anmeldung: 25.11.2009
(73) Patentinhaber: Kappema Fertigteilindustrie GmbH, 4623 Gunskirchen (AT)
(72) Erfinder: Kastner, Erich, 83334 Inzell (DE); Meier, Gerhard, 83301 Traunreut (DE)
(74) Vertreter: Beer & Partner Patentanwälte KG
(86) Internationale Anmeldenummer: PCT/EP2008/000558
(87) Internationale Veröffentlichungsnummer: WO 2008/098668

(56) Entgegenhaltungen:
- DE-A1- 19 525 082
- DE-U- 7 240 114
- DE-U1- 20 219 324
- DE-U1-202005 005 924
- US-A- 4 550 543

## Beschreibung

Die vorliegende Erfindung bezieht sich auf ein Bauelement insbesondere für Fertigteilbauten, insbesondere Wandelement gemäß dem Oberbegriff des Anspruchs 1. Ein solches Element ist z.B. in der DE-U-7240114 gezeipt.

Fertigbauelemente sind bekannt. Aus der DE OS 21 39 197 ist es bekannt, mit Hilfe einer Gussform Schalungsteile aus Kunststoff herzustellen, in deren Innenseiten nach dem Aushärteprozess die Knotenpunkte von Baustahlgewebe verankert sind. Die Schalungsteile werden nach dem Aushärten der Gussmasse entformt, auf der Baustelle zusammen mit anderen Benachbarten Schalungsteilen aufgestellt und miteinander verschweißt. Anschließend werden die zweischaligen Schalungsteile mit Beton ausgegossen, wodurch die fertigen Wände des Bauwerks entstehen. Die zweischaligen Schalungsteile verbleiben als Innen- bzw. Außenwände (Doppelwände) erhalten, daher bezeichnet man diese Art der Schalung als verlorene Schalung. Gegenüber dem in dieser Druckschrift angeführten Stand der Technik soll diese Art der Herstellung diverse Vorteile bieten. Als Stand der Technik wird dort die herkömmliche Bauweise mit wieder verwendbarer Schalung zitiert, bei der die Wandschalung durch an der Baustelle aufzubauende Schalungselemente gebildet wird, zwischen denen Baustahlgewebe angeordnet wird, und deren Zwischenraum mit Beton ausgefüllt wird. Nach dem Aushärten des Betons werden die Schalungselemente abgebaut, gereinigt und wieder im Lager verstaut. Die Montage der Schalungselemente, deren Demontage, Aufarbeitung und Lagerhaltung wird berechtigter Weise als unwirtschaftlich bezeichnet. Demgegenüber soll die dort beschriebe Herstellung von Fertigteilen vorteilhaft sein.

Dennoch ist auch die in der DE OS 21 39 197 beschriebene Herstellung von Fertigteilen aufwändig und unter wirtschaftlichen Aspekten ungenügend. Darüber hinaus ist es nicht immer erwünscht, dass die Innenwände eines Bauwerks eine Oberfläche aus Kunststoff aufweisen, da, wie dort vorgeschlagen, die verlorene Kunststoffschalung als Innen- bzw. Außenwand ja erhalten bleiben soll.

Aus der AT PS 381 129 B ist ein Verfahren zur Herstellung von Stahlbetonbauwerken sowie ein bei der Durchführung eines solchen Verfahrens hergestelltes Fertigteil bekannt. Stahlbetonbauwerke werden in der Regel in der Weise errichtet, dass eine Schalung hergestellt und abgestützt wird, die nach Einbringen der Bewehrung mit Ortbeton ausgefüllt wird. Unter Einbringung von Ortbeton ist zu verstehen, dass Flüssigbeton vor Ort in die Schalung eingebracht wird. Es sind auch Bauwerke bekannt, bei welchen lediglich ein gitterförmiges Skelett aus Stahlbeton hergestellt wird und die Zwischenräume durch andere Materialien, beispielsweise durch plattenförmige Fertigteile, ausgefüllt werden. In allen Fällen muss für die Herstellung der aus Stahlbeton bestehenden Teile der Bauwerke eine Schalung errichtet und verankert bzw. abgestützt werden, bevor der Ortbeton in den von der Schalung begrenzten Hohlraum gefüllt wird, und es muss die Schalung nach dem Erhärten des Ortbeton wieder entfernt werden. Diese Bauweise wird als Ortbetonbauweise bezeichnet.

Ferner ist noch die Skelettbauweise bekannt, bei der die aus Beton bestehenden Bauteile in der Fertigteilfabrik fertig gegossen und anschließend mit großem Aufwand zur Baustelle transportiert werden. Dort werden sie dann montiert. Der Nachteil besteht darin, dass sowohl beim Transport der großen, sperrigen und schweren Bauteile als auch bei deren Montage hoher manueller und maschineller Aufwand betrieben werden muss.

Es sind auch so genannte verlorene Schalungen bekannt, welche nach dem Erhärten des Betons am Bauwerk verbleiben. Diese verlorenen Schalungen sind allseits in Abstand voneinander angeordnet, wobei der so gebildete Zwischenraum nach dem Einsetzen der Bewehrung mit Ortbeton ausgefüllt wird. Es ist auch bereits bekannt, einander gegenüberliegende Teile der verlorenen Schalung durch den Zwischenraum überbrückende Quereisen miteinander zu verbinden, wie das bereits aus der vorgenannten DE OS 21 39 197 als bekannt nachgewiesen wurde. Bei solchen verlorenen Schalungen muss entweder gleichfalls eine gesonderte Abstützung für die Aufnahme des Betondrucks vorgesehen sein, oder es werden selbsttragende Schalungen verwendet, welche schwer und voluminös sind und häufig an ihrer Sichtfläche kein formschönes Aussehen besitzen, so dass sie nur für Zweckbauten, wie Industriebauten oder dgl., Verwendung finden können.

Bei dem in der AT 381 129 B beschrieben Verfahren zur Herstellung von Fertigteilen wird eine verlorene Schalung angewendet, die so ausgebildet ist, dass das zu errichtende Bauwerk eine schöne, jede gewünschte Form aufweisende Oberfläche besitzt und für welche keine gesonderten, später wieder zu entfernenden Stützvorrichtungen erforderlich sind, wobei auch die Menge des benötigten Ortbetons gering gehalten wird. Bei dem Verfahren wird zunächst ein räumliches, starres, selbsttragendes und die Bau- und Montagelasten tragendes Stahlgerüst errichtet, welches die Bewehrung des Bauwerkes bildet, wobei an beiden Seiten des Stahlgerüsts an diesem paarweise angeordnete plattenförmige Fertigteile fixiert werden, wobei wenigstens einer der plattenförmigen Fertigteile jedes Paares an der dem Stahlgerüst zugewendeten Seite Ausnehmungen für die Aufnahme des Stahlgerüsts aufweist und die beiden plattenförmigen Fertigteile jedes Paares zwischen den Ausnehmungen mit ihrer einander zugewendeten Seite aneinander in Anlage gebracht werden, und bei dem die das Stahlgerüst aufnehmenden Ausnehmungen mit Ortbeton ausgefüllt werden. Bei Anwendung des dort beschriebenen Verfahrens erfolgt somit die Abstützung der Fertigteile über jenes Stahlgerüst, das beim fertigen Bauwerk dessen Bewehrung bildet, wodurch der Herstellungsvorgang wesentlich vereinfacht und der Arbeitsaufwand ganz beträchtlich verringert werden soll, da der Aufund Abbau eines Stützgerüsts oder ähnlicher konstruktiver Maßnahmen für die die Schalung bildenden Fertigteile entfällt und diese Fertigteile auch nicht als selbsttragende Fertigteile dimensioniert werden müssen. Ein weiterer Vorteil des beschriebenen Verfahrens soll darin liegen, dass lediglich die Ausnehmungen, welche das Stahlgerüst aufnehmen, mit Ortbeton ausgefüllt werden. Es soll also bei dem in der AT 381 129 B beschriebenen Verfahren ein Stahlbetonbauwerk in Skelettbauweise hergestellt werden, ohne dass es erforderlich sein soll, die Zwischenräume des Skeletts nach Herstellung desselben durch andere Materialien in einem weiteren Arbeitsvorgang durch Platten oder dgl. auszufüllen.

Gemäß dem dort beschriebenen Verfahren soll auch eine einfache Anbringung der Verrohrung für die Installationsanlage möglich sein, indem diese Verrohrung am Stahlgerüst vor dem Einbringen des Ortbetons befestigt wird.

Bei den beiden benannten Verfahren mit verlorener Schalung sind die durch ihre Anwendung entstehenden Bauwerke mit Wandoberflächen aus Kunststoff versehen, weil dort die als verlorene Schalungen dienenden vorgefertigten Fertigteile bevorzugt aus Kunststoff oder Verbundwerkstoff hergestellt sein sollen. Die beschriebenen Fertigteile können jedenfalls nichts zur Stabilität des Bauwerks beitragen, da sie hinsichtlich der Aussteifung dafür nicht vorgesehen sind. Die Stabilität der Bauwerke nach diesen Bauverfahren wird im Wesentlichen durch die vorher erstellten Bewehrungen erzielt.

Der vorliegenden Erfindung liegt die Aufgabe zu Grunde, ein Bauelement zum Herstellen von Bauwerken anzugeben, welches die Vorteile der Skelettbauweise mit denen der Massivbauweise vereint, wobei das Bauelement einfach herstellbar und der Betonverbrauch minimiert sein soll, und bei dem das Bauelement freieres Planen ermöglichen soll.

Diese Aufgabe wird mit einem Bauelement gelöst, welches die Merkmale des Anspruchs 1 aufweist. Vorteilhafte Ausgestaltungen des Bauelements finden sich jeweils in den abhängigen Ansprüchen.

Die Vorteile des erfindungsgemäßen Bauelements liegen vor allem darin, dass es ein Bauelement für Fertigteilbauten darstellt, insbesondere ein Wandelement, bestehend aus zwei Begrenzungswänden die durch Bewehrungsbauteile miteinander verbunden sind, wobei zwischen den Innenflächen der Begrenzungswände wenigstens ein Einsatz zur Bildung eines Innenwand-Hohlraums als verlorene Innenschalung angeordnet ist.

Ferner ist ein Bauelement von Vorteil, wenn die Innenschalung so ausgebildet ist, dass durch sie ein zusammenhängender Innenwand-Hohlraum entsteht.

Außerdem ist ein Bauelement vorteilhaft, wenn deren Innenschalung zumindest an drei Seiten von den äußeren Konturen der Begrenzungswände zurückgesetzt angeordnet ist.

Darüber hinaus ist ein Bauelement vorteilhaft ausgebildet, wenn die Bewehrungsbauteile im Bereich des zusammenhängenden Innenwand-Hohlraums angeordnet sind, oder wenn die Bewehrungsbauteile im Bereich des zusammenhängenden Innenwand-Hohlraums sowie außerhalb dieses Bereichs, nämlich im Bereich der gesamten Innenflächen der Begrenzungswände angeordnet sind.

Von Vorteil ist ein Bauelement auch dann, wenn zwischen den Innenflächen der Begrenzungswände Mittel vorhanden sind, welche eine veränderbare Einrichtung von Elektro-, Sanitär-, Klima-, Energie- und Kommunikations- Installationen ermöglichen. Dazu kann es besonders vorteilhaft sein, wenn im Innenwand-Hohlraum Mittel vorhanden sind, welche die veränderbare Einrichtung von Elektro-, Sanitär-, Klima-, Energie- und Kommunikations- Installationen ermöglichen.

Ein Bauelement ist auch dann besonders vorteilhaft, wenn die Mittel Rohr- ,Schacht- und/oder Kanalelemente umfassen, welche nach Art einer Installations-Matrix vorinstalliert sind und wenn sich die Rohr- ,Schacht- und/oder Kanalelemente umfassende Installations-Matrix an den Innenseiten der Begrenzungswände befindet.

Günstig lässt sich ein Bauelement dann einsetzen, wenn die Rohr- ,Schacht- und/oder Kanalelemente umfassende Installations-Matrix mit Aussparungen in einer Bodenplatte korrespondieren, und wenn zum Anschluss an die Installations-Matrix Durchbrüche in den Begrenzungswänden vorgesehen sind.

Außerdem ist es vorteilhaft, wenn die Wandelemente an den Innenseiten ihrer Begrenzungswände Isolierungen aufweisen.

Die erfindungsgemäßen Bauelemente sind besonders für den Einsatz als Geschoßdecke und/oder in Form von Innen- bzw. Außenwänden als Begrenzungswände geeignet.

Vorteilhaft lassen sich mehrere Bauelemente zu mit Ortbeton vergossen Bestandteilen eines Bauwerks zusammenfügen.

Dazu ist es sinnvoll, wenn sich in den zwischen den Bauelementen ergebenden Zwischenräumen Bewehrungsbauteile befinden, wobei die Bewehrungsbauteile in den Zwischenräumen zwischen den Bauelementen unmittelbar vor dem Ausgießen mit Ortbeton eingebracht werden können, oder aber bereits beim Herstellen der Bauelemente eingebracht werden.

Die Isolierung eines erfindungsgemäßen Bauelements lässt sich verbessern, wenn im Innenwand-Hohlraum wenigstens ein evakuierter Behälter angeordnet ist.

Die Vormontage von mehreren Bauelementen wird vereinfacht, wenn zur gegenseitigen Ausrichtung der Wandelemente zueinander Hilfsvorrichtungen in Form von miteinander korrespondierenden Fixierelementen an den Außenbereichen der Wandelemente vorgesehen sind.

Mit Hilfe von Ausführungsbeispielen soll nachstehend die Erfindung anhand von Zeichnungen noch näher erläutert werden.

Es zeigt
Figur 1 ein Gebäude, bestehend aus den erfindungsgemäßen Bauelementen;
Figur 2 ein Wandelement, bestehend aus den erfindungsgemäßen Bauelementen;
Figur 3 ein Wandelement mit hinterlegtem Schachtsystem;
Figur 4 eine Seitenansicht einer aufgestellten Wand und
Figur 5 einen Schnitt entlang der Linie 5/5 in Figur 4.

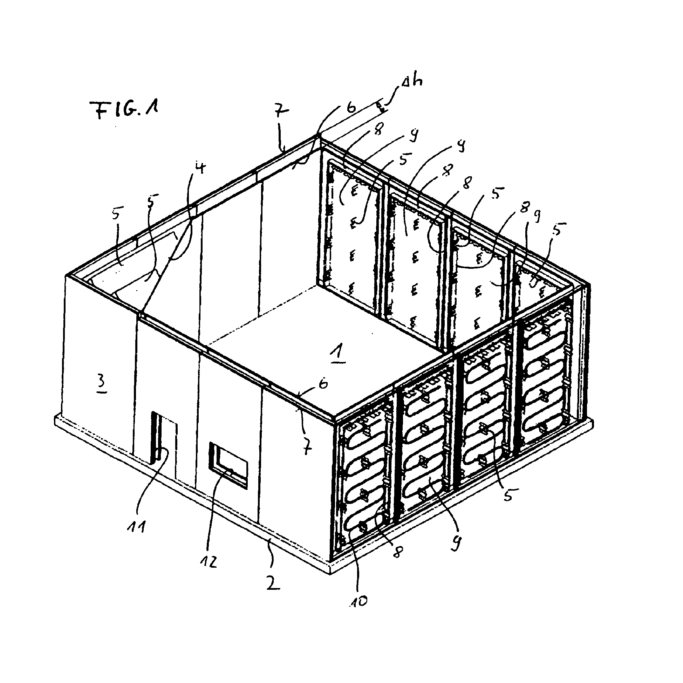

In Figur 1 ist schematisiert ein Geschoss eines Bauwerks 1 dargestellt, welches auf einer Grundplatte 2 aufgebaut ist und aus Fertigteilen 3 und 4 besteht. Als Geschossdecke ist in Teilansicht ein Abschnitt eines Deckenelements 4 mit Bewehrung 5 dargestellt. Andere Fertigteile, welche die Wandelemente 3 bilden, sind ebenfalls mit Bewehrungsbauteilen 5 versehen. Die Wandelemente 3 sind aneinander gereiht und die zwischen ihnen verbleibenden Hohlräume werden mit so genanntem Ortbeton gefüllt. Dies wird im Detail zu den nachfolgenden Figuren noch näher beschrieben werden. Es ist ersichtlich, dass die Wandelemente 3 über Begrenzungswände 6 und 7 verfügen, wobei die eine Begrenzungswand jeweils die zugehörige Innenwand 6 und die andere Begrenzungswand jeweils die zugehörige Außenwand 7 darstellt. Zwischen den Begrenzungswänden 6 und 7 befinden sich die Bewehrungsbauteile 5 sowie jeweils ein Einsatz 8 zur Bildung eines Gießmassefreien Raums 9. Innerhalb des so gebildeten Gießmassefreien Raums 9, der im Folgenden auch als Innenwand-Hohlraums 9 bezeichnet wird, können sich beliebige Installationen 10, beispielsweise für Klimatisierung, Energieversorgung, Sanitär oder ähnliches befinden. Ferner können durchgängige Schalungen in den Bauelementen 3 vorgesehen sein, um - wie in herkömmlicher Fertigbauweise - Öffnungen in der Wand, also Türen 11, Fenster 12 und/oder dgl. zu gestalten.

Die Wandelemente 3 haben eine höhere Außen- 7 als Innenwand 6, dieser Höhenunterschied Δh gibt Raum für das Auflagern der Deckenelemente 4. Die entstehenden Zwischenräume werden später auch hier mit Ortbeton ausgegossen werden.

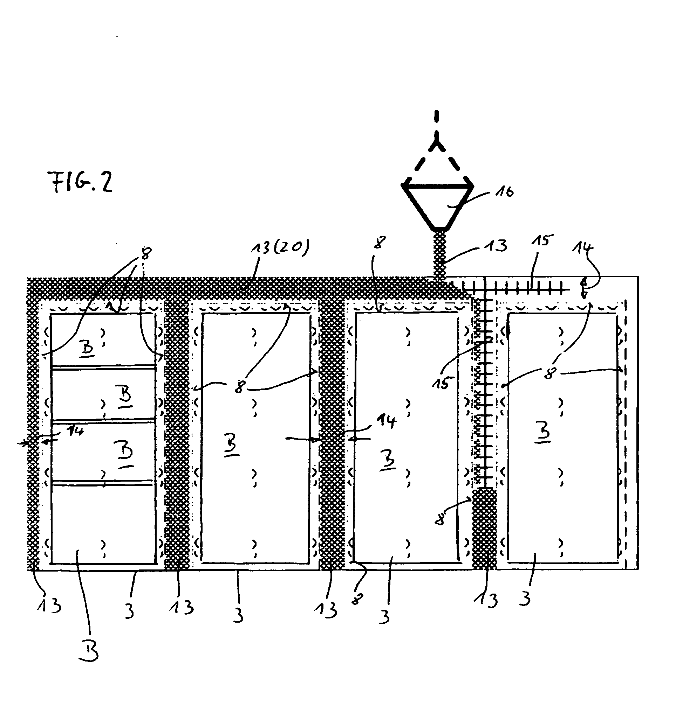

In Figur 2 ist eine Wand, bestehend aus mehreren Wandelementen 3 dargestellt. Die Wandelemente 3 sind aneinander gereiht aufgestellt und zueinander ausgerichtet. Beim Aufbau sind die Wandelemente 3 in bekannter Weise gegen Umfallen abgestützt. Dies wird hier nicht dargestellt, weil diese einfache Abstützung zum Stand der Technik gehört. Die Wandelemente 3 selbst weisen hinreichende Festigkeit auf, um dem Druck durch den eingegossenen Ortbeton 13 Stand zu halten.

Die sich in den jeweiligen Wandelementen 3 befindenden Einsätze 8 sind gegenüber den Außenkonturen der Innen- 6 und Außenwand 7 nach innen zurückgesetzt, so dass sich bei der Aneinanderreihung der Wandelemente 3 jene Zwischenräume 14 ergeben, die mit Ortbeton 13 auszufüllen sind. Um die statischen Eigenschaften zu verbessern bzw. die notwendige Stabilität des Bauwerks 1 zu gewährleisten, können zusätzliche Bewehrungen, beispielsweise in Form von Eisenträgern 15 in die Zwischenräume 14 eingebracht werden. Dies erfolgt vor dem Ausgießen der Zwischenräume 14 mit Ortbeton 13. Der Ortbeton wird mittels einer geeigneten Vorrichtung wie einem Baukran 16 oder ähnliches ausgebracht. Dies ist symbolisch in Figur 2 dargestellt. Es versteht sich, dass für die korrekte Verbindung zwischen Bodenplatte 2 und Wandelementen 3 geeignete Maßnahmen vorgesehen sind, die aber hier nicht weiter ausgeführt werden müssen, da sie im Fachwissen bereits verankert sind.

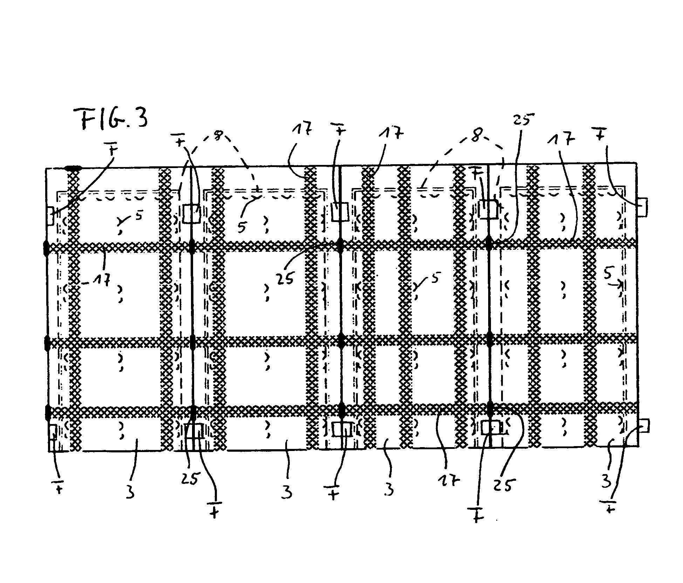

Die Darstellung in Figur 2 veranschaulicht, wie groß die Einsparungen von Ortbeton 13 sind, was sich außerordentlich bei den Herstellungskosten, aber auch im geringen Verbrauch von Ressourcen niederschlägt. Der sich ergebende Gießmassefreie Raum 9 - auch als Innenwand-Hohlraum 9 bezeichnet - ermöglicht in einfacher und vorteilhafter Weise eine besonders gute Isolierung des Wandelements 3. Der Gießmassefreie Raum 9 (Innenwand-Hohlraum 9) bewirkt in seiner Eigenschaft als Hohlraum bereits eine gute thermische Isolierung. Diese Eigenschaft lässt sich durch Einbringen von weitgehend evakuierten Behältern B sehr vorteilhaft optimieren. Der evakuierte Behälter B kann als einzelner, großer Behälter B im Gießmassefreien Raum 9 (Innenwand-Hohlraum 9) angeordnet sein, aber auch mit mehreren kleineren Behältern B lassen sich die Vorteile bei der Isolierung im Gießmassefreien Raum 9 (Innenwand-Hohlraum 9) realisieren. Diese kleineren Behälter können auch in nicht dargestellter Weise durch evakuierte Hohlkugeln realisiert sein, die sich sehr leicht in den Gießmassefreien Raum 9 einbringen lassen. Auch andere Isoliermaterialien lassen sich vorteilhaft in dem Gießmassefreien Raum 9 (Innenwand-Hohlraum 9) anordnen. Ein sehr vorteilhafter Effekt liegt außerdem darin, das jederzeit, also auch lange Zeit nach Fertigstellung des Bauwerks in den Gießmassefreien Raum 9 (Innenwand-Hohlraum 9) eine nachträgliche Isolierung, beispielsweise durch Einblasen von Dämmstoffen, eingebracht werden kann. Die zusätzlichen Vorteile, die sich durch den im Innern der Bauwerkswände entstehenden Gießmassefreien Raum 9 (Innenwand-Hohlraum 9) ergeben, werden durch die Darstellungen mit den zugehörigen Beschreibungsteilen zu den nachstehenden Figuren 3 bis 5 deutlich.

In Figur 3 ist nochmals eine Wand, bestehend aus mehreren Wandelementen 3 dargestellt. Die Wandelemente 3 sind genau so aneinander gereiht aufgestellt und zueinander ausgerichtet, wie schon zur Figur 2 beschrieben worden ist. Die Aufstellung und Ausrichtung der einzelnen Wandelemente 3 zueinander lässt sich durch Fixierelemente F erleichtern, durch welche die einzelnen Wandelemente 3 in ihrer Position schon vor dem Einfüllen des Ortbeton 13 festgelegt werden. Besonders günstig sind die Fixierelemente durch so genannte "snap-in"-Vorrichtungen zu realisieren, wie man sie beispielsweise aus der Fußboden-Belags-Technik kennt. In analoger Weise können die Wandelemente 3 beim Aufstellen und Ausrichten durch die miteinander korrespondierenden Fixierelemente F ineinander "geschnappt" werden.

In Figur 3 wurde auf die Darstellung des Ortbetons verzichtet, um keine Verwirrung durch die verschiedenen Schraffuren zu schaffen. Gezeigt sind die einzelnen Wandelemente 3, die Bewehrungen 5 (zum Teil), die Einsätze 8 als Innenschalungen und zusätzlich in schraffierter Darstellung eine so genannte Installations-Matrix 17. Die Installations-Matrix 17 veranschaulicht ein Raster von Kanälen oder Schächten, welche im Raum zwischen der Innen- 6 und Außenwand 7 angeordnet sind. Diese Kanäle oder Schächte, die durch die Installations-Matrix 17 veranschaulicht werden, vereinfachen die späteren Installationen in dem zu erstellenden Bauwerk 1. Sie werden bereits bei der Konzeption, speziell der Innenwände 6 berücksichtigt und bei deren Fertigung durch entsprechende Formen festgelegt. Die Kanäle oder Schächte können als weitere Hohlräume in der zugehörigen Wandinnenseite, aber besonders vorteilhaft durch eingelegte Kunststoffrohre oder Profile realisiert sein. Die Konzeption als Installations-Matrix 17 erleichtert bei späteren Installations-Arbeiten das Auffinden der Schächte bzw. Kanäle in dem Wandelement 3.

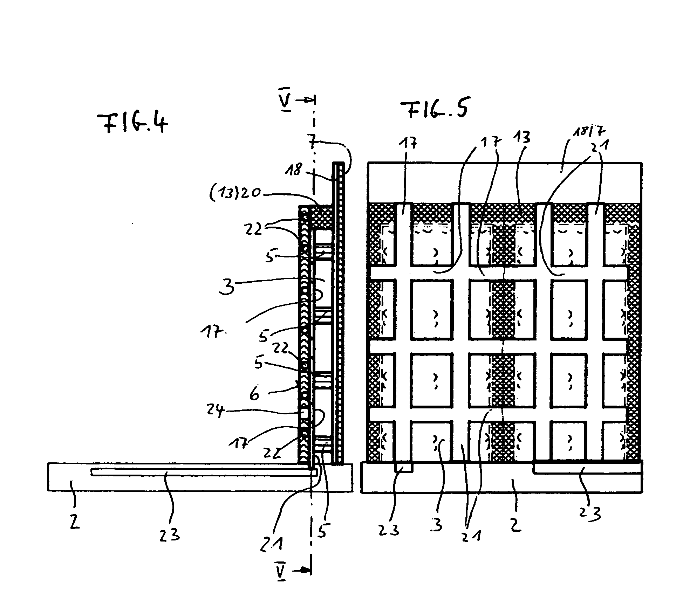

In Figur 4 ist ein geschnittenes Wandelement 3 gezeigt, welches sich auf der Bodenplatte 2 befindet. Rechts außen befindet sich die Außenwand 7, sie ist durch eine waagerechte Schraffur dargestellt. An deren Innenseite ist eine Isolierung 18 vorhanden, die bereits bei der Herstellung der Außenwand 7 an dieser angebracht worden ist. Durch Bewehrungsbauteile bzw. Verbindungselemente 5 ist die Außenwand 7 mit der zugehörigen Innenwand 6 verbunden, sie werden deshalb auch als Verbindungselemente 5 bezeichnet. Im oberen Bereich ist in gekreuzter Schraffur ein Sturz 19 aus gegossenem Ortbeton 13 zu erkennen, welcher die Innenwand 6 mit der Außenwand 7 verbindet. Die Außenwand 7 ragt in der Höhe über die Innenwand 6 hinaus, was zu dem bereits in der Beschreibung zur Figur 1 erwähnt wurde und wodurch ein Auflager 20 für eine hier nicht dargestellte Geschoßdecke gebildet wird. Die Innenwand 6 trägt auf ihrer Innenseite eine Installations-Matrix 17 aus Kunststoffprofilen 21, die ähnlich, wie die Isolierung 18 der Außenwand 7 bereits bei der Fertigung der Innenwand 6 mit dieser zusammen hergestellt worden ist. Ferner befindet sich in der Innenwand 6 ein Rohrsystem 22, welches ebenfalls bereits bei der Fertigung der Innenwand 6 in dieser eingegossen wurde. Dieses Rohrsystem 22 kann zur Klimatisierung des Bauwerks 1 dienen und ist ebenfalls vorteilhafter Weise in Form eines bereits bei der Konzipierung des Gebäudes 1 festgelegten Rasters oder Musters vorbestimmt. Dadurch kann die spätere Anschlußarbeit und die Vernetzung mit den Leitungen in der Bodenplatte 2 oder einer Geschoßdecke wesentlich erleichtert werden. Die zur Vervollständigung des Installationsnetzes erforderlichen Aussparungen 23 in der Bodenplatte 2 sind in vorteilhafter Weise bauseits bereits vorgesehen. Ferner können in der Innenwand 6 auch bereits Durchbrüche 24 bei der Herstellung vorgesehen sein, die dann später die Anschlußarbeit an der Installations-Matrix 17 erleichtern. Die Installations-Matrix 17 kann jegliche Art von Installation umfassen, also auch die Installation von Abwasserrohren. Es versteht sich, dass die beschriebenen Maßnahmen auch für eine Außenwand 7 bereits bei der Herstellung vorgenommen sein können.

Figur 5 verdeutlicht die Lage der Installations-Matrix 17 zwischen der Innenwand 6 und der Außenwand 7. In dieser Schnittdarstellung entlang der Schnittlinie V/V in Figur 4 ist durch Schraffur der eingegossene Ortbeton 13 zu erkennen, welcher auch die Installations-Matrix 17 von Kanälen und Schächten 21 umschließt. In der Bodenplatte 2 sind Aussparungen 23 zum Anschluss an die Kanäle und Schächte 21 veranschaulicht. Selbstverständlich sind für die Installations-Matrix 17 auch korrespondierende Anschlüsse 25 in den Wandelementen 3 vorhanden, diese sind mit dem Bezugszeichen 25 versehen.

### Bezugszeichenliste

- 1: Bauwerk, Gebäude
- 2: Bodenplatte
- 3: Wandelement
- 4: Deckenelement
- 5: Bewehrungsbauteil, auch Verbindungselemente
- 6: Innenwand
- 7: Außenwand
- 8: Einsatz, verlorene Innenschalung
- 9: Innenwand-Hohlraum
- 10: Installationen
- 11: Türen
- 12: Fenster
- 13: Ortbeton
- 14: Zwischenräume
- 15: Eisenträger
- 16: Baukran
- 17: Installations-Matrix
- 18: Isolierung
- 19: Sturz
- 20: Auflager
- 21: Kunststoffprofil
- 22: Rohrsystem
- 23: Aussparung
- 24: Durchbruch
- 25: Anschlüsse
- B: evakuierte Behälter
- F: Fixierelement

## Patentansprüche

1. Bauelement für Fertigteilbauten, insbesondere Wandelement (3), bestehend aus zwei Begrenzungswärden (6, 7) die durch Bewehrungsbauteile und/oder Verbindungselemente (5) miteinander verbunden sind und deren Zwischenraum mit aushärtbarer Gießmasse (13) ausfüllbar ist, wobei im Zwischenraum zwischen den Innenflächen der Begrenzungswände (6, 7) eine Schalung angeordnet ist, **dadurch gekennzeichnet, dass** zur Bildung wenigstens eines zwischen den Innenflächen der Begrenzungswände (6, 7) angeordneten gießmassefreien Hohlraums (9) wenigstens ein Einsatz (8) als verlorene Innenschalung angeordnet ist.

2. Bauelement nach Anspruch 1, **dadurch gekennzeichnet, dass** der Einsatz (8) so ausgebildet ist, dass durch ihn wenigstens ein zusammenhängender gießmassefreier Raum (9) zwischen den Innenflächen der Begrenzungswände (6, 7) entsteht.

3. Bauelement nach Anspruch 1, **dadurch gekennzeichnet, dass** der Einsatz (8) zumindest an einer Seite von den äußeren Konturen der Begrenzungswände (6, 7) zurückgesetzt angeordnet ist.

4. Bauelement nach Anspruch 1, **dadurch gekennzeichnet, dass** der Einsatz (8) ein Verdrängungskörper ist.

5. Bauelement nach Anspruch 1, **dadurch gekennzeichnet, dass** die Bewehrungsbauteile und/oder Verbindungselemente (5) im Bereich des zusammenhängenden gießmassefreien Raums (9) angeordnet sind.

6. Bauelement nach Anspruch 1, **dadurch gekennzeichnet, dass** die Bewehrungsbauteile und/oder Verbindungselemente (5) sowohl im Bereich des zusammenhängenden gießmassefreien Raums (9) sowie außerhalb dieses Bereichs im Bereich der gesamten Innenflächen der Begrenzungswände (6, 7) angeordnet sind.

7. Bauelement nach Anspruch 1, **dadurch gekennzeichnet**, das zwischen den Innenflächen der Begrenzungswände (6, 7) Mittel (10, 17, 21, 22) vorhanden sind, welche die gegebenenfalls veränderbare Einrichtung von Elektro-, Sanitär-, Klima-, Energie- und Kommunikations-Installationen ermöglichen.

8. Bauelement nach Anspruch 1, **dadurch gekennzeichnet, dass** im gießmassefreien Raum (9) Mittel (10, 17, 21, 22) vorhanden sind, welche die gegebenenfalls veränderbare Einrichtung von Elektro-, Sanitär-, Klima-, Energie- und Kommunikations- Installationen ermöglichen.

9. Bauelement nach Anspruch 7 oder 8, **dadurch gekennzeichnet, dass** die Mittel (10, 17, 21, 22). Rohr-, Schacht und/oder Kanalelemente (10, 21, 22) umfassen, welche nach Art einer Installations-Matrix (17) vorinstalliert sind.

10. Bauelement nach Anspruch 9, **dadurch gekennzeichnet, dass** sich die Rohr-, Schacht- und/oder Kanalelemente (10, 21, 22) umfassende Installations-Matrix (17) an den Innenseiten der Begrenzungswände (6, 7) befinden.

11. Bauelement nach einem der Ansprüche 9 oder 10, **dadurch gekennzeichnet, dass** die Rohr-, Schacht- und/oder Kanalelemente (10, 21, 22) umfassende Installations-Matrix (17) nit Aussparungen (23) in einer Bodenplatte (2) korrespondieren.

12. Bauelement nach einem der Ansprüche 9 oder 10, **dadurch gekennzeichnet, dass** zum Anschluss an die Installations-Matrix (17) Durchbrüche (24) in den Begrenzungswänden (6, 7) vorgesehen sind.

13. Bauelement nach Anspruch 1, **dadurch gekennzeichnet, dass** die Wandelemente (3) an den Innenseiten ihrer Begrenzungswände Isolierungen (18) aufweisen.

14. Bauelement nach Anspruch 1, **dadurch gekennzeichnet, dass** die Begrenzungswände als Innen- bzw. Außenwand (6, 7) des Wandelements (3) ausgebildet sind.

15. Bauelement nach Anspruch 1, **dadurch gekennzeichnet, dass** mehrere Bauelemente (3, 4) zusammengefügt und mit Ortbeton (13) vergossen Bestandteile eines Bauwerks oder Gebäudes (1) darstellen.

## Claims

1. A structural element for prefabricated structures, in particular wall element (3), consisting of two boundary walls (6, 7), which are connected to each other by means of reinforcing parts and/or connecting elements (5) and the interspace of which can be filled with curable casting compound (13), a formwork being arranged in the interspace between the inner faces of the boundary walls (6, 7), **characterised in that** at least one insert (8) is arranged as lost internal formwork in order to form at least one casting-compound-free cavity (9) between the inner faces of the boundary walls (6, 7).

2. The structural element according to claim 1, **characterised in that** the insert (8) is formed in such a manner that at least one continuous, casting-compound-free space (9) is thereby produced between the inner faces of the boundary walls (6, 7).

3. The structural element according to claim 1, **characterised in that** the insert (8) is arranged set back at least on one side of the outer contours of the boundary walls (6, 7).

4. The structural element according to claim 1, **characterised in that** the insert (8) is a displacement body.

5. The structural element according to claim 1, **characterised in that** the reinforcing parts and/or connecting elements (5) are arranged in the region of the continuous casting-compound-free space (9).

6. The structural element according to claim 1, **characterised in that** the reinforcing parts and/or connecting elements (5) are arranged both in the region of the cohesive casting-compound-free space (9) and outside said region in the region of the entire inner faces of the boundary walls (6, 7).

7. The structural element according to claim 1, **characterised in that** means (10, 17, 21, 22) that allow electric, sanitary, air-conditioning, energy and communications installations to be fitted, if necessary in a variable manner, are present between the inner faces of the boundary walls (6, 7).

8. The structural element according to claim 1, **characterised in that** means (10, 17, 21, 22) that allow electric, sanitary, air-conditioning, energy and communications installations to be fitted, if necessary in a variable manner, are present in the casting-compound-free space (9).

9. The structural element according to claim 7 or 8, **characterised in that** the means (10, 17, 21, 22) comprise pipe, shaft and/or duct elements (10, 21, 22), which are preinstalled in the manner of an installation matrix (17).

10. The structural element according to claim 9, **characterised in that** the installation matrix (17) comprising pipe, shaft and/or duct elements (10, 21, 22) is situated on the inner sides of the boundary walls (6, 7).

11. The structural element according to one of claims 9 or 10, **characterised in that** the installation matrix (17) comprising pipe, shaft and/or duct elements (10, 21, 22) corresponds with cut-outs (23) in a baseplate (2).

12. The structural element according to one of claims 9 or 10, **characterised in that** holes (24) are provided in the boundary walls (6, 7) adjacently to the installation matrix (17).

13. The structural element according to claim 1, **characterised in that** the wall elements (3) have insulation (18) on the inner sides of their boundary walls.

14. The structural element according to claim 1, **characterised in that** the boundary walls are formed as the inner and outer walls (6, 7) of the wall element (3).

15. The structural element according to claim 1, **characterised in that** a plurality of structural elements (3, 4) are joined together and form constituents of a structure or building (1) cast with in-situ concrete (13).

## Revendications

1. Élément de construction pour des constructions préfabriquées, en particulier un élément de paroi (3), constitué de deux parois de délimitation (6, 7) reliées entre elles par des pièces d'armature et/ou des éléments de liaison (5), dont l'interstice peut être rempli avec une masse de coulée durcissable (13), un coffrage étant agencé dans l'interstice entre les surfaces intérieures des parois de délimitation (6, 7), **caractérisé en ce que** pour former au moins un espace creux (9) exempt de masse de coulée entre les surfaces intérieures des parois de délimitation (6, 7), il est prévu au moins une pièce intercalaire (8) en tant que coffrage intérieur perdu.

2. Élément de construction selon la revendication 1, **caractérisé en ce que** la pièce intercalaire (8) est conçue de manière à créer au moins un espace continu (9) exempt de masse de coulée entre les surfaces intérieures des parois de délimitation (6, 7).

3. Élément de construction selon la revendication 1, **caractérisé en ce que** la pièce intercalaire (8) est agencée en retrait, au moins sur un côté des contours extérieurs des parois de délimitation (6, 7).

4. Élément de construction selon la revendication 1, **caractérisé en ce que** la pièce intercalaire (8) est un corps de refoulement.

5. Élément de construction selon la revendication 1, **caractérisé en ce que** les pièces d'armature et/ou les éléments de liaison (5) sont agencés dans la région de l'espace continu exempt de masse de coulée (9).

6. Élément de construction selon la revendication 1, **caractérisé en ce que** les pièces d'armature et/ou les éléments de liaison (5) sont agencés dans la région de l'ensemble des surfaces intérieures des parois de délimitation (6, 7), aussi bien dans la région de l'espace continu exempt de masse de coulée (9) qu'à l'extérieur de cette région.

7. Élément de construction selon la revendication 1, **caractérisé en ce que** des moyens (10, 17, 21, 22) permettant l'installation éventuellement modifiable de dispositifs électriques, sanitaires, de climatisation, énergétiques et de communication, sont prévus entre les surfaces intérieures des parois de délimitation (6, 7).

8. Élément de construction selon la revendication 1, **caractérisé en ce que** des moyens (10, 17, 21, 22) permettant l'installation éventuellement modifiable de dispositifs électriques, sanitaires, de climatisation, énergétiques et de communication, sont prévus dans l'espace exempt de masse de coulée (9).

9. Élément de construction selon la revendication 7 ou 8, **caractérisé en ce que** les moyens (10, 17, 21, 22) comprennent des éléments de conduit, de regard et/ou de canal (10, 21, 22) préinstallés à la façon d'une matrice d'installation (17).

10. Élément de construction selon la revendication 9, **caractérisé en ce que** les éléments de conduit, de regard et/ou de canal (10, 21, 22) de la matrice d'installation (17) se trouvent sur les côtés intérieurs des parois de délimitation (6, 7).

11. Élément de construction selon l'une des revendications 9 ou 10, **caractérisé en ce que** les éléments de conduit, de regard et/ou de canal (10, 21, 22) de la matrice d'installation (17) correspondent avec des évidements (23) dans une plaque de fond (2).

12. Élément de construction selon l'une des revendications 9 ou 10, **caractérisé en ce que** des brèches (24) sont prévues dans les parois de délimitation (6, 7) pour le raccordement à la matrice d'installation (17).

13. Élément de construction selon la revendication 1, **caractérisé en ce que** les éléments de paroi (3) comportent des isolations (18) sur les côtés intérieurs de leurs parois de délimitation.

14. Élément de construction selon la revendication 1, **caractérisé en ce que** les parois de délimitation sont conçues en tant que paroi intérieure ou extérieure (6, 7) de l'élément de paroi (3).

15. Élément de construction selon la revendication 1, **caractérisé en ce que** plusieurs éléments de construction (3, 4) assemblés et coulés avec du béton coulé sur place (13) constituent des composants d'une construction ou d'un bâtiment (1).
